# EUROPÄISCHE PATENTANMELDUNG

(11) **EP 1 441 171 A2**
(43) Veröffentlichungstag der Anmeldung: **28.07.2004**
(21) Anmeldenummer: 04090005.2
(22) Anmeldetag: 08.01.2004
(51) Int. Cl.: F17C 1/00, F17C 5/06, F17C 7/00

(54) **Verfahren sowie Vorrichtung zur Überwachung eines Isoliergases**

(30) Priorität: 22.01.2003 DE 10302857
(71) Anmelder: SIEMENS AKTIENGESELLSCHAFT, 80333 München (DE)
(72) Erfinder: Schriek, Uwe, 10625 Berlin (DE)

(57) **Zusammenfassung**

Eine druckgasisolierte elektrische Anlage (1) weist einen abgeschlossenen Gasraum (3) auf. Das in dem Gasraum (3) befindliche Isoliergas ist über einen Auffüll-/Ablassstrang (6) mit Isoliergas befüll- und entleerbar. In dem Auffüll-/Ablassstrang (6) ist ein Durchflussmessgerät (7) angeordnet. Das Durchflussmessgerät (7) misst die in den Gasraum eingebrachte und aus dem Gasraum entnommene Menge an Isoliergas. Mittels eines Mikrocontrollers (8) werden die Gasmengen saldiert und die Messwerte und/oder der Saldowert in einem Speicher (11) gespeichert.

## Beschreibung

Die Erfindung bezieht sich auf ein Verfahren sowie eine Vorrichtung zur Überwachung eines Isoliergases eines Gasraumes einer Druckgasisolation einer elektrischen Anlage.

Es ist bekannt, mit Hilfe von Wartungsgeräten Gasräume einer druckgasisolierten elektrischen Anlage mit Isoliergas zu befüllen und auch zu entleeren. Dabei ist es vorgesehen, das Isoliergas möglichst verlustfrei zu entnehmen bzw. einzufüllen. Ein Verfahren zum Füllen und/oder Entleeren von Gasräumen, bei welchem eine möglichst große Isoliergasmenge für eine erneute Verwendung zurückgewonnen wird, ist beispielsweise aus der Offenlegungsschrift DE 31 22 886 A1 bekannt.

Der vorliegenden Erfindung liegt die Aufgabe zugrunde, ein Verfahren sowie eine Vorrichtung der eingangs genannten Art so auszubilden, dass ein Nachweis des Verbleibs von verlustigem Isoliergas geführt werden kann. Eine weitere Aufgabe der Erfindung ist es, eine dafür geeignete Vorrichtung anzugeben.

Die Aufgabe wird bei einem Verfahren der eingangs genannten Art erfindungsgemäß dadurch gelöst, dass bei einem Zuführen und einem Abführen von Isoliergas die zu- bzw. abgeführte Isoliergasmenge erfasst und bezogen auf den Gasraum saldiert wird.

Die Saldierung der zugeführten und abgeführten Isoliergasmengen gestattet es, eine Angabe über die Dichtigkeit des Gasraumes der Druckgasisolation zu treffen. Durch eine Saldierung der zu- bzw. abgeführten Isoliergasmengen ist es möglich, die Dichtheit eines Gasraumes auch über einen längeren Zeitraum zu überwachen. Da bei Wartungsarbeiten regelmäßig eine Entleerung der Gasräume vorgenommen werden muss, ist es so möglich, ohne zusätzlichen Aufwand den Verbleib des Isoliergases zu dokumentieren. Insbesondere für einen Zeitraum von mehreren Jahren oder gar Jahrzehnten ist so für den einzelnen Gasraum eine Bilanz aufstellbar, welche gegebenenfalls einen Verlust von Isoliergas dokumentiert.

Neben der Dichtigkeit des Gasraumes kann bei einer scheinbaren Zunahme des Isoliergases innerhalb eines Gasraumes auch eine mögliche Leckage zwischen zwei zueinander benachbart angeordneten Gasräumen nachgewiesen werden. Das von der einem ersten Gasraum in einen zweiten Gasraum überströmende Isoliergas wird zum Einen in dem ersten Gasraum als Verlust festgestellt werden und zum Anderen wird in dem zweiten Gasraum eine scheinbare Zunahme der Gasmenge festgestellt. Durch eine entsprechende Auswertung der Saldowerte mehrerer an sich voneinander getrennter Gasräume können so auch komplexere Zusammenhänge und Wechselbeziehungen der Gasräume untereinander ermittelt werden.

Eine weitere vorteilhafte Ausgestaltung kann vorsehen, dass die zu- bzw. abgeführte Isoliergasmenge temperaturkompensiert erfasst wird.

Eine temperaturkompensierte Erfassung der Isoliergasmengen ermöglicht eine normierte Erfassung des Volumens der Isoliergase. Temperaturbedingte Schwankungen des Volumens werden durch die Kompensation ausgeglichen, so dass eine Saldierung von bei unterschiedlichen Temperaturen zu- bzw. abgeführten Isoliergasmengen ermöglicht ist.

Weiterhin kann vorteilhaft vorgesehen sein, dass eine durchfließende Gasmenge erfasst wird.

Durch eine durchfließende Erfassung der Gasmenge sind zusätzliche Messvorgänge in gegebenenfalls vorzuhaltenden separaten Behältern nicht notwendig. Während eines regulären Befüllens oder Ablassens des Isoliergases kann eine durchfließende Isoliergasmenge automatisch ohne zusätzlichen Zeit- oder Materialaufwand erfasst werden.

Weiterhin kann vorgesehen sein, dass in einem Auffüll/Ablassstrang des Gasraumes dauerhaft ein Durchflussmessgerät angeordnet ist.

Neben einer Messung am Auffüll-/Ablassstrang besteht weiterhin die Möglichkeit, auch das zum Füllen/Entleeren notwendige Wartungsgerät in die Überwachung mit einzubeziehen. Dazu kann beispielsweise vorgesehen sein, dass weitere Messgeräte beispielsweise am Wartungsgerät oder an weiteren Gasleitungen angeordnet sind. Die Messgeräte können körperlich fest mit der/den Anlage(n) oder weiteren Baugruppen verbunden sein. Besonders vorteilhaft ist die Anordnung der Messgeräte im Bereich von Ventilen oder in Ventilen integriert.

Die dauerhafte Anordnung eines Durchflussmessgerätes bewirkt eine zuverlässige Saldierung der einzelnen Isoliergasmengen, Bedienfehler oder Störungen durch extern vorzusehende Messgeräte sind so ausgeschlossen. Weiterhin ist durch die dauerhafte Zuordnung über die Betriebszeit des Gasraumes der elektrischen Anlage ein zuverlässiger Nachweis über die jemals in den Gasraum eingebrachten Gasmengen geführt. Insbesondere bei Isoliergasen, welche aufgrund ihrer physikalischen und chemischen Eigenschaften einer besonderen Behandlung bzw. Lagerung oder Entsorgung bedürfen, kann so deren Verbleib belegt werden.

Vorteilhafterweise kann weiterhin vorgesehen sein, dass die von dem Durchflussmessgerät ermittelten Messwerte oder/und ein Saldowert in einem Speicher gespeichert sind/ist.

Die Speicherung der Messwerte und/oder eines Saldowertes dienen der dauerhaften Dokumentation des Verbleibs des Isoliergases. Die gespeicherten Werte können auch einer weiteren Verarbeitung zugänglich sein. So ist es beispielsweise möglich, bei dem Erreichen von Grenzwerten eine entsprechende Warnung abzugeben. Diese Warnung kann darüber hinaus auch von dem Erreichen des Grenzwertes in Verbindung eines zugehörigen Zeitraumes abhängen. Als Speicher sind an sich bekannte Halbleiterspeicher, Festplattenspeicher oder andere Massenspeichermedien einsetzbar.

Es kann weiterhin vorgesehen sein, dass jeweils einem Gasraum ein Speicher zugeordnet ist.

Eine separate Speicherung der den jeweiligen Gasräumen zugehörigen Messwerte bzw. Saldowerte ermöglicht eine enge Eingrenzung von Fehlern bzw. Störungen der Anlage.

Außerdem kann eine druckgasisolierte Schaltanlage mit wenigstens einem Gasraum ein dem Gasraum zugeordnetes Durchflussmessgerät zur Durchführung des oben genannten Verfahrens aufweisen.

Druckgasisolierte Schaltanlagen können eine große räumliche Ausdehnung aufweisen. Daraus folgend ist eine relativ große Menge an Isoliergas in deren Gasräumen enthalten. Zur Gewährleistung eines zuverlässigen Betriebs ist eine entsprechende Überwachung des Isoliergases notwendig.

Im Folgenden wird die Erfindung anhand eines Ausführungsbeispiels in einer Zeichnung schematisch gezeigt und nachfolgend näher beschrieben.

Dabei zeigt die
- Figur 1: eine druckgasisolierte elektrische Anlage und die
- Figur 2: ein Durchflussmessgerät mit einem zugeordneten Mikrocontroller und die
- Figur 3: eine druckgasisolierte Schaltanlage mit mehreren Gasräumen.

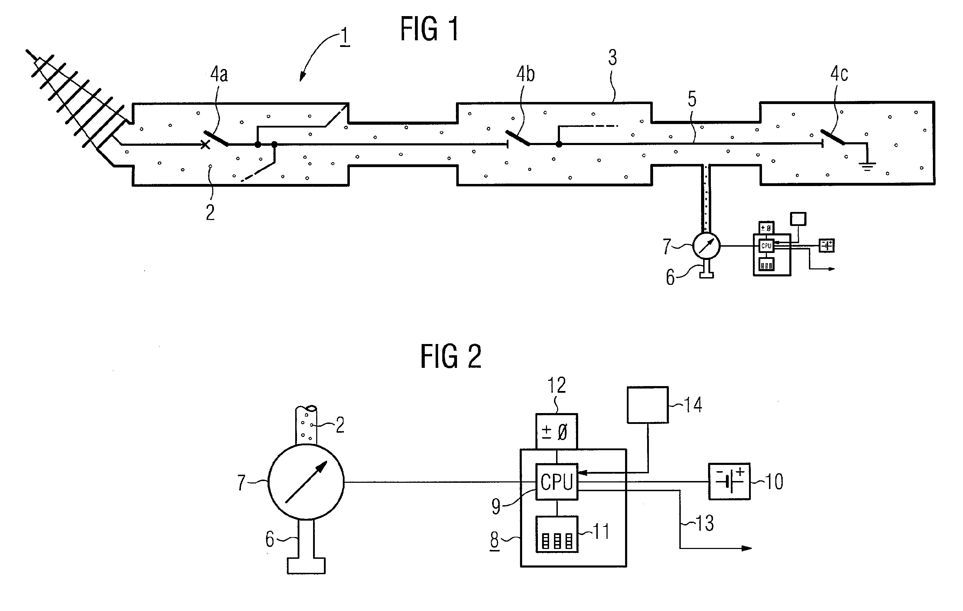

Die in der Figur 1 dargestellte elektrische Anlage 1 weist eine Druckgasisolation 2 auf. Die elektrische Anlage 1, eine druckgasisolierte Schaltanlage, weist eine gasdichte Kapselung auf, welche einen abgeschlossenen Gasraum 3 bildet. Im Innern des Gasraumes 3 sind beispielsweise elektrische Schaltgeräte 4a,b,c sowie elektrische Leiterverbindungen 5 angeordnet. Die elektrischen Schaltgeräte 4a,b,c sowie die elektrischen Leiterverbindungen 5 sind gegenüber der gasdichten Kapselung 2 isoliert gehalten. Der Gasraum 3 ist mit einem unter erhöhtem Druck stehenden Isoliergas befüllt. Das Isoliergas ist in das Innere des Gasraumes 3 mittels eines Auffüll-/Ablassstranges 6 einbring- bzw. ablassbar. Im Zuge des Auffüll-/Ablassstranges 6 ist ein Durchflussmessgerät 7 angeordnet. Das Durchflussmessgerät 7 kann beispielsweise ein Durchflussmessgerät 7, welches die durchfließende Gasmenge unter Nutzung von Ultraschallwellen ermittelt. Weiterhin kann das Durchflussmessgerät 7 ein Ferraris-Zähler sein.

In der Figur 2 ist der Auffüll-/Ablassstrang 6 sowie das Durchflussmessgerät 7 vergrößert dargestellt. Der Auffüll/Ablassstrang 6 weist ein anlagenfestes Ventil auf. Das Durchflussmessgerät 7 ist an einen Mikrocontroller 8 angeschlossen. Der Mikrocontroller 8 weist eine zentrale Verarbeitungseinheit (CPU) 9 auf. Der Mikrocontroller 8 wird von einer Energiequelle 10, beispielsweise einer Batterie, einer Solarzelle oder einem anderen Energiespeicher mit der zum Betrieb notwendigen Energie versorgt. Die von dem Durchflussmessgerät 7 ermittelten Messwerte werden durch die zentrale Verarbeitungseinheit 9 verarbeitet und können in einem Speicher 11 gespeichert werden. Aus den einzelnen Messwerten wird durch den Mikrocontroller 8 ein Saldowert gebildet. Der Saldowert kann ebenfalls in dem Speicher 11 gespeichert werden. Weiterhin ist dem Mikrocontroller 8 eine Anzeigeeinrichtung 12 zugeordnet. Auf dieser Anzeigeeinrichtung 12 ist vor Ort beispielsweise der Saldowert darstellbar. Über eine Kommunikationsstrecke 13 sind die von dem Mikrocontroller 8 empfangenen und von dem Mikrocontroller 8 verarbeiteten Messwerte bzw. der Saldowert an übergeordnete Steuer- und Leiteinrichtungen übertragbar. Mittels einer Eingabe oder Messeinrichtung 14 ist der Gehalt verschiedener Komponenten eines Isoliergasgemisches bzw. der Partialdruck einzugeben oder zu messen. Unter Verwendung dieser Werte ist es möglich, die bei einem Isoliergasgemisch vorliegenden einzelnen Gasanteile separat zu überwachen. Das Durchflussmessgerät 7 ist dauerhaft dem Gasraum 3 zugeordnet. Das Durchflussmessgerät 7 ermittelt das durchfließende Volumen von Isoliergas bei einem Füllen oder Entleeren. Zur Fehlerkorrektur ist diese Volumenmessung temperaturkompensiert.

Aus dem jeweiligen Saldowert lässt sich die theoretisch in dem Schaltgerät befindliche Gasmenge bestimmen. Unter Messung des Gasdruckes innerhalb der Druckgasisolation 2 und der Temperatur kann nach der Gasgleichung die reale Gasmenge im Innern des Gasraumes 3 ermittelt werden. Aus dem Vergleich des Saldowertes mit dem berechneten Wert ist der Verlust an Isoliergas auch quantitativ ermittelbar.

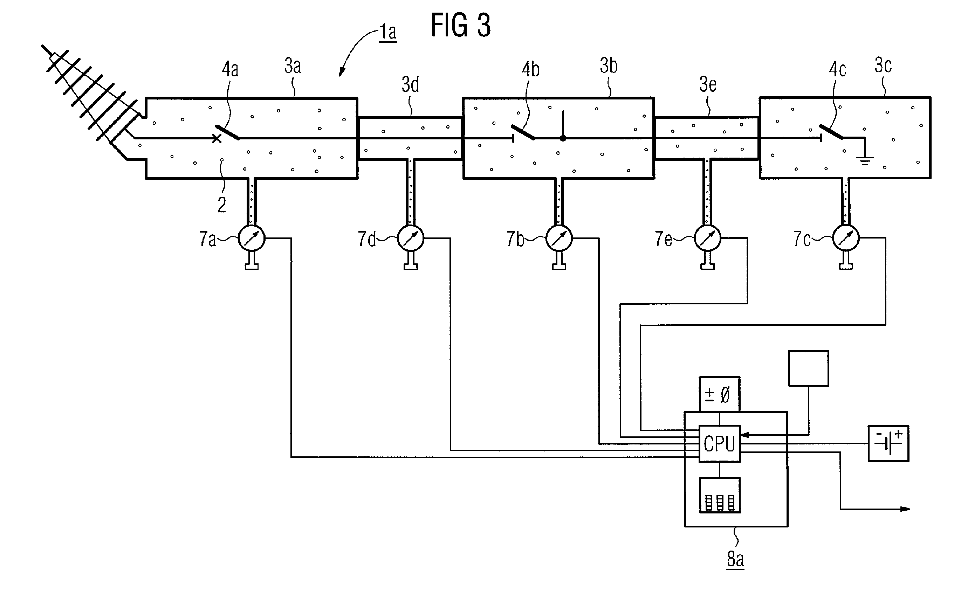

Die in der Figur 3 dargestellte druckgasisolierte Schaltanlage 1a weist mehrere voneinander geschottete Gasräume 3a,b,c,d,e auf. Jedem der Gasräume 3a,b,c,d,e ist ein Durchflussmessgerät 7a,b,c,d,e zugeordnet. Mit Hilfe dieser Durchflussmessgeräte 7a,b,c,d,e können die jedem Gasraum 3a,b,c,d,e zugeführten und entnommenen Gasmengen erfasst werden. Die von den Durchflussmessgeräten 7a,b,c,d,e ermittelten Daten werden an einen zentralen Mikrocontroller 8a übertragen. Dieser verwaltet bzw. verarbeitet die gewonnenen Daten in der oben beschriebenen Weise.

Zur Speicherung der Mess- bzw. Saldowerte sind separate Speicher für jeden der Gasräume 3a,b,c,d,e vorgesehen. Der Speicher kann auch übergeordnet zentral angeordnet sein. So sind beispielsweise die Daten mehrerer Schaltanlagen zentral speicherbar.

## Patentansprüche

1. Verfahren zur Überwachung eines Isoliergases eines Gasraumes (3) einer Druckgasisolation (2) einer elektrischen Anlage (1),
**dadurch gekennzeichnet, dass**
bei einem Zuführen und einem Abführen von Isoliergas die zu- bzw. abgeführte Isoliergasmenge erfasst und bezogen auf den Gasraum (3) saldiert wird.

2. Verfahren nach Anspruch 1,
**dadurch gekennzeichnet, dass**
die zu- bzw. abgeführte Isoliergasmenge temperaturkompensiert erfasst wird.

3. Verfahren nach Anspruch 1 oder 2,
**dadurch gekennzeichnet, dass**
eine durchfließende Gasmenge erfasst wird.

4. Vorrichtung zur Überwachung eines Isoliergases eines Gasraumes (3) einer Druckgasisolation (2) einer elektrischen Anlage (1),
**dadurch gekennzeichnet, dass**
in einem Auffüll-/Ablassstrang (6) des Gasraumes (3) dauerhaft ein Durchflussmessgerät (7) angeordnet ist.

5. Vorrichtung nach Anspruch 4,
**dadurch gekennzeichnet, dass**
die von dem Durchflussmessgerät (7) ermittelten Messwerte oder/ und ein Saldowert in einem Speicher (11) gespeichert sind/ ist.

6. Vorrichtung nach Anspruch 5,
**dadurch gekennzeichnet, dass**
jeweils einem Gasraum (3) ein Speicher zugeordnet ist.

7. Druckgasisolierte Schaltanlage (1) mit wenigstens einem Gasraum (3),
**dadurch gekennzeichnet, dass**
wenigstens einem Gasraum (3) ein Durchflussmessgerät (7) zur Durchführung des Verfahrens nach einem der Ansprüche 1 bis 3 zugeordnet ist.
